(19) Europäisches Patentamt
European Patent Office
Office européen des brevets

(11) EP 2 104 168 A1

(12) **EUROPEAN PATENT APPLICATION**
published in accordance with Art. 153(4) EPC

(43) Date of publication:
**23.09.2009 Bulletin 2009/39**

(21) Application number: **07832592.5**

(22) Date of filing: **27.11.2007**

(51) Int Cl.:
***H01M 8/02*** *(2006.01)* ***C08F 16/24*** *(2006.01)*
***C08J 5/22*** *(2006.01)* ***H01B 1/06*** *(2006.01)*
***H01M 8/10*** *(2006.01)*

(86) International application number:
**PCT/JP2007/072867**

(87) International publication number:
**WO 2008/066048 (05.06.2008 Gazette 2008/23)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **28.11.2006 JP 2006319927**

(71) Applicant: **Asahi Glass Company, Limited**
**Chiyoda-ku**
**Tokyo 100-8405 (JP)**

(72) Inventors:
- **KOTERA, Seigo**
**Tokyo 100-8405 (JP)**
- **SHIMOHIRA, Tetsuji**
**Tokyo 100-8405 (JP)**
- **HONMURA, Satoru**
**Tokyo 100-8405 (JP)**
- **SAITO, Susumu**
**Tokyo 100-8405 (JP)**

(74) Representative: **Müller-Boré & Partner Patentanwälte**
**Grafinger Strasse 2**
**81671 München (DE)**

# (54) SOLID POLYMER ELECTROLYTE MEMBRANE FOR POLYMER ELECTROLYTE FUEL CELL AND MEMBRANE ELECTRODE ASSEMBLY

(57) To provide a polymer electrolyte membrane for polymer electrolyte fuel cells, which is less likely to be broken even when it undergoes repetition of swelling in a wet state and shrinkage in a dry state; and a membrane/electrode assembly using it.

A polymer electrolyte membrane 15 having a tensile yield stress of at most 5.5 MPa obtained by an evaluation method according to JIS K 7161-1994 from the tensile stress-strain curve obtained in accordance with the tensile test according to JIS K 7161-1994 at a temperature of 80°C at a strain rate of 1/min; and a membrane/electrode assembly 10 having the polymer electrolyte membrane 15 disposed between an anode 13 and a cathode 14 having a catalyst layer 11.

Fig. 1

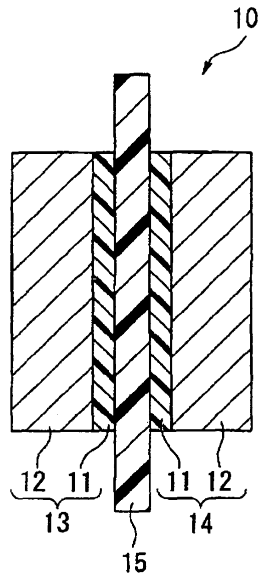


EP 2 104 168 A1

## Description

BACKGROUND OF THE INVENTION

FIELD OF THE INVENTION

The present invention relates to a polymer electrolyte membrane for polymer electrolyte fuel cells, and a membrane/electrode assembly.

DISCUSSION OF BACKGROUND

A polymer electrolyte fuel cell is, for example, a stack of a plurality of cells each comprising a membrane/electrode assembly sandwiched between two separators. The membrane/electrode assembly comprises an anode and a cathode each having a catalyst layer and a polymer electrolyte membrane disposed between the anode and the cathode. For the polymer electrolyte membrane, a fluoropolymer such as a perfluorocarbon polymer having sulfonic groups is usually used. Further, the fluoropolymer is required to exhibit high proton conductivity.

In order to improve the proton conductivity of a fluoropolymer, ionic groups such as sulfonic groups may be increased. However, the fluoropolymer having the ionic groups increased is likely to be swelled by water absorption in a wet state. Further, in polymer electrolyte fuel cells, the wet state and a dry state are repeated, and therefore, in a case where the fluoropolymer undergoes repetition of swelling in a wet state and shrinkage in a dry state, the polymer electrolyte membrane containing the fluoropolymer is likely to be cracked and damaged.

As a polymer electrolyte membrane which is less likely to be broken even when it undergoes repetition of swelling in a wet state and shrinkage in a dry state, the following electrolyte membrane has been proposed.

(1) An electrolyte membrane having a tensile strain to a yield point of at least 15% (preferably at least 25%) by a tensile test, and having a glass transition temperature of at least 130°C (Patent Document 1)

Further, in the case of a fluoropolymer having ionic groups increased, one having a tensile strain (elongation) to a yield point of higher than 15% and having a glass transition temperature of at least 130°C has not been known. Accordingly, a material having a tensile strain to a yield point of at least 15% and having a glass transition temperature of at least 130°C, is limited to a specific non-fluoropolymer such as a polyacrylate, a polyether ketone or a polyether ether ketone. However, such a non-fluoropolymer is not suitable for a polymer electrolyte membrane for polymer electrolyte fuel cells since the chemical durability is lower than the fluoropolymer.

Patent Document 1: JP-A-2005-302592

DISCLOSURE OF THE INVENTION

OBJECT TO BE ACCOMPLISHED BY THE INVENTION

It is an object of the present invention to provide a polymer electrolyte membrane for polymer electrolyte fuel cells, which is less likely to be broken even when it undergoes repetition of swelling in a wet state and shrinkage in a dry state despite a fluoropolymer is contained therein, and a membrane/electrode assembly excellent in the durability against repetition of the wet state and the dry state and the chemical durability.

MEANS TO ACCOMPLISH THE OBJECT

The polymer electrolyte membrane for polymer electrolyte fuel cells of the present invention is one comprising a fluoropolymer and having a tensile yield stress of at most 5.5 MPa, as determined by the following procedures (i) and (ii):

(i) the polymer electrolyte membrane is subjected to a tensile test according to JIS K 7161-1994 at a temperature of 80°C and a strain rate of 1/min to obtain a tensile stress-strain curve, and
(ii) from the tensile stress-strain curve, the tensile yield stress of the polymer electrolyte membrane is obtained by an evaluation method according to JIS K 7161-1994.
The polymer electrolyte membrane for polymer electrolyte fuel cells of the present invention preferably has a tensile strength of at least 20 MPa, as determined by the following procedure (iii):
(iii) from the tensile stress-strain curve obtained in the above procedure (i), the tensile strength of the polymer electrolyte membrane is obtained by an evaluation method according to JIS K 7161-1994.

The ratio of the above tensile strength to the above tensile yield stress (tensile strength/ tensile yield stress) is preferably at least 4.5.

The above tensile yield stress is preferably at most 4.0 MPa.

The polymer electrolyte membrane for polymer electrolyte fuel cells of the present invention preferably has a proton conductivity of at least 0.06S/cm in an atmosphere at a temperature of 80°C under a relative humidity of 50%.

The above fluoropolymer preferably has repeating units based on a vinyl ether type monomer with a mass (equivalent weight) of at most 400 per 1 mol of ionic groups.

The above fluoropolymer preferably has repeating units based on tetrafluoroethylene.

The above fluoropolymer is preferably a perfluoropolymer.

The membrane/electrode assembly for polymer electrolyte fuel cells of the present invention is one in which the polymer electrolyte membrane for polymer electrolyte fuel cells of the present invention, is disposed between an anode and a cathode.

## EFFECT OF THE INVENTION

The polymer electrolyte membrane for polymer electrolyte fuel cells of the present invention is less likely to be broken even when it undergoes repetition of swelling in a wet state and shrinkage in a dry state despite a fluoropolymer is contained therein.

The membrane/electrode assembly for polymer electrolyte fuel cells of the present invention is excellent in the durability against repetition of the wet state and the dry state and the chemical durability.

## BRIEF DESCRIPTION OF DRAWINGS

Fig. 1 is a cross-sectional view illustrating an example of the membrane/electrode assembly of the present invention.
Fig. 2 is a graph illustrating a tensile stress-strain curve of the polymer electrolyte membrane.
Fig. 3 is a partly enlarged graph of Fig. 2.
Fig. 4 is a cross-sectional view illustrating another example of the membrane/electrode assembly of the present invention.
Fig. 5 is a graph illustrating tensile stress-strain curves of the polymer electrolyte membranes in Examples.
Fig. 6 is a partly enlarged graph of Fig. 5.

## MEANINGS OF SYMBOLS

10: Membrane/electrode assembly
11: Catalyst layer
13: Anode
14: Cathode
15: Polymer electrolyte membrane

## BEST MODE FOR CARRYING OUT THE INVENTION

In the present specification, a group represented by the formula (α) will be referred to as group (α). The same applies to groups represented by other formulae. Further, a compound represented by the formula (1) will be referred to as compound (1). The same applies to compounds represented by other formulae.

### <Membrane/electrode assembly>

Fig. 1 is a cross-sectional view illustrating one example of a membrane/electrode assembly for polymer electrolyte fuel cells (hereinafter referred to as "membrane/electrode assembly") provided with the polymer electrolyte membrane for polymer electrolyte fuel cells (hereinafter referred to as "polymer electrolyte membrane") of the present invention. The membrane/electrode assembly 10 comprises an anode 13 having a catalyst layer 11 and a gas diffusion layer 12, a cathode 14 having a catalyst layer 11 and a gas diffusion layer 12, and a polymer electrolyte membrane 15 disposed between the anode 13 and the cathode 14 in a state where it is in contact with the catalyst layers 11.

(Polymer Electrolyte Membrane)

The polymer electrolyte membrane 15 is a membrane comprising a proton conductive polymer.

The tensile yield stress of the polymer electrolyte membrane 15 is at most 5.5 MPa, preferably at most 4.0 MPa. When the tensile yield stress is at most 5.5 MPa, it is possible to obtain a membrane which is less likely to be broken even when it undergoes repetition of swelling in a wet state and shrinkage in a dry state despite a fluoropolymer is contained therein.

As the tensile yield stress of the polymer electrolyte membrane 15 becomes small, the in-plane stress generated through the swelling-shrinkage cycles becomes small, such being advantageous. However, if it is too small, there will be a problem that the membrane is likely to undergo plastic deformation due to cell assembling pressure or the like exerted at the time of assembling fuel cells. Further, the handleability will be also deteriorated. From the above viewpoint, the tensile yield stress is preferably at least 0.4 MPa, more preferably at least 1.0 MPa.

The tensile yield stress of the polymer electrolyte membrane 15 is determined by the following procedures (i) and (ii):

(i) the polymer electrolyte membrane is subjected to a tensile test according to JIS K7161-1994 at a temperature of 80°C and a strain rate of 1/min to obtain a tensile stress/strain curve, and
(ii) from the tensile stress/strain curve, the tensile yield stress of the polymer electrolyte membrane is obtained by an evaluation method according to JIS K7161-1994 at the time of drying at a temperature of 80°C.

Particularly, it is determined as follows.

From the polymer electrolyte membrane, a specimen with a width of 10 mm and a length of 70 mm is cut out. A thermoplastic chamber of a general-purpose tensile tester is adjusted to 80°C and stabilized. Chucks are provided on the general-purpose tensile tester so that the distance would be 50 mm, and the specimen is mounted on the chucks and left to stand for 30 minutes to stabilize the temperature. The specimen is pulled at a rate of 50 mm/min (strain rate of 1/min), and the load at that time is measured by using a 1000N full-scale load cell, and the increase of the length between the chucks is measured at the same time.

From the initial cross-sectional area A [$mm^2$] and measuring load F [N] of the specimen, the tensile stress $\sigma$ [MPa] is determined by the following formula:

$$\sigma = F/A$$

Further, from the initial length between the chucks $L_0$=50 [mm] and the increase of the length between the chucks $\Delta L_0$[mm], the tensile-strain (elongation) $\varepsilon$ [%] is determined by the following formula:

$$\varepsilon = \Delta L_0 / L_0$$

From the tensile stress $\sigma$ and the tensile strain $\varepsilon$, the tensile stress-strain curve is obtained. The tensile stress-strain curve obtained is applied to the closest curve among examples of four tensile stress-strain curves shown in Fig. 1 according to JIS K7161-1994, the yield point y in the tensile stress-strain curve is determined. The tensile stress $\sigma$ in the yield point y is regarded as the tensile yield stress $\sigma_y$.

Further, as shown in Fig. 2, a polymer electrolyte membrane made of some fluoropolymer, may show a tensile stress-strain curve as corresponding to a curve between the curve c and the curve d in Fig. 1 according to JIS K7161-1994. In such a case, as shown in Fig. 3, the yield point y is determined by a method corresponding to the curve c in Fig. 1 according to JIS K7161-1994.

The tensile strength of the polymer electrolyte membrane 15 is preferably at least 20 MPa, more preferably at least 30 MPa. When the tensile strength is at least 20 MPa, it has high durability and sufficient strength against the in-plane stress applied during swelling/shrinkage. The higher the tensile strength, the better.

The tensile strength of the polymer electrolyte membrane 15 is determined by the following procedure (iii) :

(iii) From the tensile stress-strain curve obtained by the above procedure (i), the tensile strength of the polymer electrolyte membrane at the time of drying at 80°C is obtained by an evaluation method according to JIS K7161-1994.

Specifically, it is determined as follows.

The tensile stress-strain curve obtained is applied to the closest curve among examples of four tensile stress-strain curves shown in Fig. 1 according to JIS K7161-1994, and the break point B in the tensile stress-strain curve is determined. The tensile stress $\sigma$ at the break point B is regarded as a tensile stress at break $\sigma_B$. Between the tensile stress at break $\sigma_B$ and the tensile yield stress $\sigma_y$, the larger one is regarded as a tensile strength $\sigma_M$.

The ratio of the tensile strength and the tensile yield stress (tensile strength/tensile yield stress) is preferably at least 3.6, more preferably at least 4.0, particularly preferably at least 4.5. The ratio being at least 3.6 means that the tensile strength is sufficient to the in-plane stress applied during swelling/shrinkage, and therefore, an electrolyte membrane is considered to have high durability.

From the viewpoint that the polymer electrolyte membrane 15 is excellent in the chemical durability and can secure the performance stably for a long time, it contains a fluoropolymer as a proton conducive polymer. The proportion of the fluoromonomer is preferably 100 mass% based on the proton conductive polymer (100 mass%).

The fluoropolymer is preferably a polymer having repeating units based on a vinyl ether type monomer with a mass [g] (Equivalent Weight, hereinafter referred to as "EW") of at most 400 per 1 mol of ionic groups. The conductivity of the polymer depends upon the concentration of the ionic groups in the polymer. When EW of the vinyl ether monomer is at most 400, it is possible for a polymer comprising repeating units based on the monomer and repeating units based on a hydrophobic monomer to obtain a sufficiently high ionic group concentration even when the units based on the hydrophobic monomer are reduced. As a result, it is possible for the polymer to obtain sufficiently high mechanical strength as well as high conductivity. On the other hand, if EW is too low, the hydrophilic nature of the main chain is increased, whereby it is likely to be dissolved in water. EW of the vinyl ether monomer is more preferably from 230 to 330. The ionic groups may, for example, be sulfonic groups, sulfonimide groups or sulfonmethide groups.

The repeating units based on the vinyl ether monomer are preferably repeating units having a group ($\alpha$).

Hereinafter, a fluoropolymer having repeating units having a group ($\alpha$) will be referred to as "polymer Q":

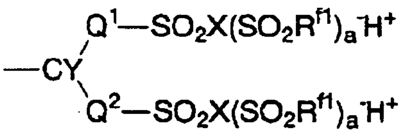

($\alpha$)

wherein $Q^1$ is a perfluoroalkylene group which may have an etheric oxygen atom, $Q^2$ is a single bond or a perfluoroalkylene group which may have an etheric oxygen atom, $R^{f1}$ is a perfluoroalkyl group which may have an etheric oxygen atom, X is an oxygen atom, a nitrogen atom or a carbon atom, "a" is 0 when X is an oxygen atom, 1 when X is a nitrogen atom, or 2 when X is a carbon atom, and Y is a fluorine atom or a monovalent perfluoro organic group.

In a case where the perfluoroalkylene group for each of $Q^1$ and $Q^2$ has an etheric oxygen atom, the number of such an oxygen atom may be one or more. Further, such an oxygen atom may be inserted in the carbon atom-carbon atom bond of the perfluoroalkyl group or may be inserted into the terminal of the carbon atom bond.

The perfluoroalkylene group may be linear or branched, and is preferably linear. The number of carbon atoms in the perfluoroalkylene group is preferably from 1 to 6, more preferably from 1 to 4. When the number of carbon atoms is too large, the boiling point of the fluoromonomer will be high, and purification will be difficult. Further, if the number of carbon atoms is too large, the ion exchange capacity of polymer Q is lowered, and the proton conductivity is lowered.

$Q^2$ is preferably a $C_{1-6}$ perfluoroalkylene group which may have an etheric oxygen atom. When $Q^2$ is a $C_{1-6}$ perfluoroalkylene group which may have an etheric oxygen atom, excellent stability in power generation performance will be achieved when a polymer electrolyte fuel cell is operated over a long period of time as compared with a case where $Q^2$ is a single bond.

At least one of $Q^1$ and $Q^2$ is preferably a $C_{1-6}$ perfluoroalkylene group having an etheric oxygen atom. A fluoromonomer having a $C_{1-6}$ perfluoroalkylene group having an etheric oxygen atom can be prepared without fluorination reaction with a fluorine gas, and accordingly its production is easy with high yield.

The $-SO_2X(SO_2R^{f1})_a^-H^+$ group may be a sulfonic group (a $-SO_3^-H^+$ group), an sulfonimide group (a $-SO_2N(SO_2R^{f1})^-H^+$ group) or a sulfonmethide group (a $-SO_2C(SO_2R^{f1})_2^-H^+$ group).

The perfluoroalkyl group as $R^{f1}$ may be linear or branched, and is preferably linear. The number of carbon atoms of $R^{f1}$ is preferably from 1 to 6, more preferably from 1 to 4. $R^{f1}$ is preferably a perfluoromethyl group, a perfluoroethyl group or the like.

In the case of sulfonmethide, two $R^{f1}$ may be the same groups or different groups.

Y is preferably a fluorine atom or a $C_{1-6}$ linear perfluoroalkyl group which may have an etheric oxygen atom.

Polymer Q is preferably a perfluoropolymer from the viewpoint of the chemical durability.

Polymer Q may further comprise repeating units based on another monomer as mentioned below. The repeating units based on such another monomer is preferably repeating units based on a perfluoromonomer, more preferably repeating units based on tetrafluoroethylene from the viewpoint of the chemical durability of the polymer electrolyte membrane 15. The repeating units based on such another monomer are preferably repeating units based on a compound (n1) as mentioned below, from the viewpoint that the polymer electrolyte membrane 15 is thereby less likely to be broken even when it undergoes repetition of swelling in a wet state and shrinkage in a dry state.

Polymer Q can be produced, for example, by the following steps.

(I) A step of polymerizing a monomer having a group (β) (hereinafter, referred to as "compound (m1)") and as the case requires, another monomer to obtain a precursor polymer having $-SO_2F$ groups (hereinafter, referred to as "polymer P"):

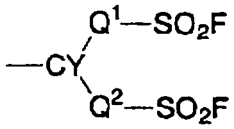

(β)

(II) A step of bringing polymer P and a fluorine gas into contact with each other as the case requires to fluorinate unstable terminal groups of polymer P.

(III) A step of converting $-SO_2F$ groups of polymer P to sulfonic groups, sulfonimide groups or sulfonmethide groups to obtain polymer Q.

Step (I):

Compound (m1) may, for example, be obtained by Preparation Example shown in Example 1 as mentioned below.

Such another monomer may, for example, be tetrafluoroethylene, chlorotrifluoroethylene, vinylindene fluoride, hexafluoropropylene, trifluoroethylene, vinyl fluoride, ethylene or compounds (n1) to (n3):

$CF_2{=}CFOR^{f2}$ (n1)

$CH_2{=}CHR^{f3}$ (n2)

$CH_2{=}CHCH_2R^{f3}$ (n3)

wherein $R^{f2}$ is a $C_{1-12}$ perfluoroalkyl group which may have at least one etheric oxygen atom, and $R^{f3}$ is a $C_{1-12}$ perfluoroalkyl group.

As such another monomer, a perfluoromonomer is preferred, and tetrafluoroethylene is more preferred in view of chemical durability of the polymer electrolyte membrane 15. Further, such another monomer is preferably one providing repeating units based on compound (n1) since the polymer electrolyte membrane 15 is thereby less likely to be broken even when it undergoes repetition of swelling in a wet state and shrinkage in a dry state.

The polymerization method may be a known polymerization method such as a bulk polymerization method, a solution polymerization method, a suspension polymerization method or an emulsion polymerization method.

The polymerization is carried out under conditions under which radicals will form. As a method of forming radicals, irradiation with radiation rays such as ultraviolet rays, y rays or electron rays or addition of an initiator may, for example, be mentioned.

The polymerization temperature is usually from 20 to 150°C.

The initiator may, for example, be a bis(fluoroacyl) peroxide, a bis(chlorofluoroacyl) peroxide, a dialkyl peroxydicarbonate, a diacyl peroxide, a peroxyester, an azo compound or a persulfate, and with a view to obtaining a precursor polymer P having a small number of unstable terminal groups, preferred is a perfluoro compound such as a bis(fluoroacyl) peroxide.

A solvent to be used in the solution polymerization method may, for example, be a polyfluorotrialkylamine compound, a perfluoroalkane, a hydrofluoroalkane, a chlorofluoroalkane, a fluoroolefin having no double bond at the polymer terminals, a polyfluorocycloalkane, a polyfluorocyclic ether compound, a hydrofluoroether, a fluorine-containing low molecular weight polyether or t-butanol.

Step (II):

The unstable terminal group is a group formed by the chain transfer reaction, a group derived from the radical initiator, or the like, and specifically it is a -COOH group, a $-CF=CF_2$ group, a -COF group, a $-CF_2H$ group or the like. By fluorinating such unstable terminal groups, decomposition of polymer Q will be suppressed.
The fluorine gas may be diluted with an inert gas such as nitrogen, helium or carbon dioxide or may be used as it is without being diluted.
The temperature at which polymer P and the fluorine gas are brought into contact with each other is preferably from room temperature to 300°C, more preferably from 50 to 250°C, furthermore preferably from 100 to 220°C, particularly preferably from 150 to 200°C.
The time over which polymer P and the fluorine gas are in contact with each other is preferably from one minute to one week, more preferably from 1 to 50 hours. Step (III):
For example, in a case where the $-SO_2F$ groups are converted to sulfonic acid groups, step (III-1) is carried out, and when the $-SO_2F$ groups are converted to sulfonimide groups, step (III-2) is carried out.

(III-1) A step of hydrolyzing the $-SO_2F$ groups of polymer P into a sulfonate, and converting the sulfonate to an acid form to obtain sulfonic acid groups.
(III-2) A step of sulfonimidizing the $-SO_2F$ groups of polymer P into sulfonimide groups

Step (III-1):

The hydrolysis is carried out, for example, by bringing polymer P and a basic compound into contact with each other in a solvent.
The basic compound may, for example, be sodium hydroxide or potassium hydroxide. The solvent may, for example, be water or a solvent mixture of water and a polar solvent. The polar solvent may, for example, be an alcohol (such as methanol or ethanol) or dimethyl sulfoxide.
The conversion to an acid form is carried out, for example, by bringing the polymer P having $-SO_2F$ groups hydrolyzed, into contact with an aqueous solution of e.g. hydrochloric acid or sulfuric acid.
The hydrolysis and the conversion to an acid form are carried out usually at from 0 to 120°C.

Step (III-2):

As the sulfonimidization, a known method such as a method disclosed in the specification of U.S. Patent No. 5,463,005 or a method disclosed in Inorg. Chem. 32(23), p. 5,007 (1993) may, for example, be mentioned.

(Catalyst Layer)

The catalyst layer 11 is a layer containing a catalyst and a proton conductive polymer.
The catalyst may be a catalyst having platinum or a platinum alloy supported on a carbon support. The catalyst for the cathode 14 is preferably a catalyst having a platinum/cobalt alloy supported on a carbon support in view of durability.
The carbon support may be a carbon black powder, and preferably a carbon black powder graphitized by e.g. heat treatment in view of durability.
The proton conductive polymer may, for example, be polymer Q or another proton conductive polymer other than polymer Q. Such another proton conductive polymer may, for example, be another fluoropolymer other than polymer Q or a hydrocarbon polymer, and such another fluoropolymer is preferred in view of the durability.
Such another fluoropolymer is particularly preferably a copolymer comprising repeating units based on tetrafluoroethylene and repeating units having a fluoro structure having a sulfonic group.
The repeating units having a fluoro structure having a sulfonic group is preferably compound (1):

$$\begin{array}{l} -CF_2-CF- \\ \qquad\quad | \\ \qquad (OCF_2CFX^1)_m-O_q-(CF_2)_n-SO_3H \quad \cdots (1) \end{array}$$

wherein $X^1$ is a fluorine atom or a trifluoromethyl group, m is an integer of from 0 to 3, n is an integer of from 1 to 12, and q is 0 or 1.

The hydrocarbon polymer may, for example, be sulfonated polyarylene, sulfonated polybenzoxazole, sulfonated polybenzothiazole, sulfonated polybenzimidazole, sulfonated polysulfone, sulfonated polyethersulfone, sulfonated polyether ethersulfone, sulfonated polyphenylenesulfone, sulfonated polyphenylene oxide, sulfonated polyphenylene sulfoxide, sulfonated polyphenylene sulfide, sulfonated polyphenylene sulfide sulfone, sulfonated polyether ketone, sulfonated polyether ether ketone, sulfonated polyether ketone ketone or sulfonated polyimide.
The catalyst layer 11 may contain a water repellent with a view to increasing the effect of suppressing flooding. The water repellent may, for example, be a copolymer of tetrafluoroethylene and hexafluoropropylene, a copolymer of tetrafluoroethylene and perfluoro(alkyl vinyl ether) or polytetrafluoroethylene. The water repellent is preferably a fluoropolymer soluble in a solvent, with a view to easily carrying out water repellent treatment of the catalyst layer 11. The proportion of the water repellent is preferably from 0.01 to 30 mass% in the catalyst layer 11 (100 mass%).

(Gas Diffusion Layer)

The gas diffusion layer 12 may, for example, be carbon paper, carbon cloth or carbon felt.
The gas diffusion layer 12 is preferably subjected to water repellent treatment with e.g. polytetrafluoroethylene.

(Carbon Layer)

The membrane/electrode assembly 10 may have carbon layers 16 each between the catalyst layer 11 and the gas diffusion layer 12 as shown in Fig. 4. By disposing the carbon layers 16, the gas diffusibility on the surface of the catalyst layers 11 will improve, whereby the power generation performance of the polymer electrolyte fuel cell will remarkably improve.
The carbon layer 16 is a layer containing carbon and a nonionic fluoropolymer.
The carbon is preferably carbon nanofibers having a fiber diameter of from 1 to 1,000 nm and a fiber length of at most 1,000 μm.
The nonionic fluoropolymer may, for example, be polytetrafluoroethylene.

(Process for Producing Membrane/Electrode Assembly)

The membrane/electrode assembly 10 is produced, for example, by the following process.

(a-1) A process of forming catalyst layers 11 on a polymer electrolyte membrane 15 to prepare a membrane/catalyst layer assembly, and sandwiching the membrane/catalyst layer assembly between gas diffusion layers 12.
(a-2) A process of forming a catalyst layer 11 on a gas diffusion layer 12 to prepare electrodes (anode 13, cathode 14) and sandwiching a polymer electrolyte membrane 15 between the electrodes.

In a case where the membrane/electrode assembly 10 has carbon layers 16, the membrane/electrode assembly 10 is produced, for example, by the following process.

(b-1) A process of applying an ink-dispersed solution containing carbon and a nonionic fluoropolymer to a substrate film and drying the ink-dispersed solution to form a carbon layer 16, forming a catalyst layer 11 on the carbon layer 16, bonding such catalyst layers 11 and a polymer electrolyte membrane 15, separating the substrate films to prepare a membrane/catalyst layer assembly having carbon layers 16, and sandwiching the membrane/catalyst layer assembly between gas diffusion layers 12.
(b-2) A process of applying an ink containing carbon and a nonionic fluoropolymer to a gas diffusion layer 12 and drying the ink to form a carbon layer 16, and sandwiching a membrane/catalyst layer assembly in the process (a-1) between such gas diffusion layers 12 each having a carbon layer 16.

In a case where the fluoropolymer is the polymer Q, the polymer electrolyte membrane 15 is produced by the following method.

(x-1) A method of forming polymer P into a membrane and then carrying out the above step (III).
(x-2) A method of forming polymer Q obtained by the above step (III) into a membrane.

Such a forming method may, for example, be a casting method.
As a process for forming the catalyst layer 11, the following processes may be mentioned.

(y-1) A process of applying an ink for forming a catalyst layer on a polymer electrolyte membrane 15, a gas diffusion

layer 12 or a carbon layer 16 and drying the ink.

(y-2) A process of applying an ink for forming a catalyst layer on a substrate film and drying the ink to form a catalyst layer 11, and transferring the catalyst layer 11 to a polymer electrolyte membrane 15.

The ink for forming a catalyst layer is an ink having a proton conductive polymer and a catalyst dispersed in a solvent. The ink for forming a catalyst layer may be prepared, for example, by mixing the ink composition as mentioned below with an ink of the catalyst.

The viscosity of the ink for forming a catalyst layer varies depending upon the process for forming a catalyst layer 11 and accordingly the ink may be an ink having a viscosity of several tens cP or may be a paste having a viscosity of about 20,000 cP.

The ink for forming a catalyst layer may contain a thickener to adjust the viscosity. The thickener may be ethyl cellulose, methylcellulose, a cellosolve thickener or a fluorinated solvent (such as pentafluoropropanol or flon).

The ink composition is an ink obtained by dispersing a proton conductive polymer in a solvent containing an organic solvent having a hydroxyl group and water.

The organic solvent having a hydroxyl group is preferably an organic solvent in which the number of carbon atoms in its main chain is from 1 to 4, and methanol, ethanol, n-propanol, isopropanol, tert-butanol or n-butanol may, for example, be mentioned. The organic solvents having a hydroxyl group may be used alone or as a mixture of two or more.

The proportion of water is preferably from 10 to 99 mass%, more preferably from 40 to 99 mass% in the solvent (100 mass%). By increasing the proportion of water, it is possible to improve dispersibility of the proton conductive polymer in the solvent.

The proportion of the organic solvent having a hydroxyl group is preferably from 1 to 90 mass%, more preferably from 1 to 60 mass% in the solvent (100 mass%).

The solvent may contain a fluorinated solvent. The fluorinated solvent may, for example, be hydrofluorocarbon, fluorocarbon, hydrochlorofluorocarbon, fluoroether or a fluorinated alcohol.

The proportion of the proton conductive polymer is preferably from 1 to 50 mass%, more preferably from 3 to 30 mass% in the ink composition (100 mass%).

<Polymer Electrolyte Fuel Cell>

The membrane/electrode assembly of the present invention may be used for a polymer electrolyte fuel cell. A polymer electrolyte fuel cell is prepared, for example, by sandwiching a membrane/electrode assembly between two separators to form a cell, and stacking a plurality of such cells.

The separator may, for example, be an electrically conductive carbon plate having grooves formed to constitute flow passes for a fuel gas or an.oxidant gas containing oxygen (such as air or oxygen).

As a type of the polymer electrolyte fuel cell, a hydrogen/oxygen type fuel cell or a direct methanol type fuel cell (DMFC) may, for example, be mentioned.

The above-described polymer electrolyte membrane 15 has a tensile yield stress of at most 5.5 MPa, and such a membrane is therefore less likely to be broken even when it undergoes repetition of swelling in a wet state and shrinkage in a dry state despite a fluoropolymer is contained therein. The reasons are as follows.

The polymer electrolyte membrane disclosed in Patent Document 1 is designed not to be easily broken by having the tensile strain (elongation) adjusted not to exceed the yield point (namely, by increasing the tensile strain up to the yield point) even when such a membrane is swelled in a wet state. On the other hand, a polymer electrolyte membrane containing a fluoropolymer is likely to be broken when it undergoes repetition of swelling in a wet state and shrinkage in a dry state since the tensile strain up to the yield point is small.

However, the present inventors have newly discovered that even when the polymer electrolyte membrane is a membrane having a small tensile strain up to the yield point, if the tensile yield stress in the yield point is sufficiently small, the polymer electrolyte membrane is less likely to be broken even when it undergoes repetition of swelling and shrinkage to such an extent that the tensile strain exceeds the yield point. Further, the present inventors have discovered that when the tensile yield stress of the polymer electrolyte membrane is at most 5.5 MPa, it is possible to obtain practical durability against the repetition of swelling in a wet state and shrinkage in a dry state, and the present invention has been accomplished.

Further, the above-described membrane/electrode assembly 10 is provided with the polymer electrolyte membrane 15 which is less likely to be broken even when it undergoes repetition of swelling in a wet state and shrinkage in a dry state despite a fluoropolymer is contained therein, whereby such a membrane/electrode assembly is excellent in the durability against repetition of the wet state and the dry state and the chemical durability.

EXAMPLES

Now, the present invention will be described in detail with reference to Examples. However, it should be understood that the present invention is by no means restricted to such specific Examples.
Examples 1 to 7 are Preparation Examples, Examples 8 to 10 and 12 to 14 are Examples of the present invention, and Examples 11 and 15 are Comparative Examples.

(Ion Exchange Capacity)

The ion exchange capacity (AR) (unit: meq/g dry polymer) of polymer Q was obtained by the following method.
Regarding each of films with 200 μm made of two types of polymers (a polymer having AR of 1.0 and a polymer having AR of 1.1) in which AR was preliminarily determined by titration, the peak intensity based on a sulfur atom was measured by using a fluorescent X-ray (RIX3000, manufactured by Rigaku Corporation), and a calibration curve showing the relationship between the peak intensity and AR was prepared. Polymer P was pressed at a temperature of TQ value as mentioned below to prepare a membrane, and its peak intensity based on a sulfur atom was measured by using the fluorescent X-ray, whereby AR was identified by the above calibration curve.

(TQ Value)

The TQ value (unit: °C) indicates the molecular weight of the polymer P and is a temperature at which the amount of the polymer extruded becomes 100 $mm^3$/sec when melt extrusion is carried out under an extrusion pressure of 2.94 MPa by using a nozzle with a length of 1 mm and an inner diameter of 1 mm.
An amount of polymer P extruded was measured by changing the temperature by using a flow tester CFT-500A (manufactured by Shimadzu Corporation) and the TQ value at which the amount extruded becomes 100 $mm^3$/sec was determined.

(Molar Ratio of Repeating Units)

The molar ratio of the repeating units constituting polymer P was determined by melt-state $^{19}$F-NMR.

(Proton Conductivity)

The proton conductivity of polymer Q was determined by the following method.
To a film of the polymer Q with a width of 5 mm, a substrate having four-prove electrodes disposed thereon with a distance of 5 mm was closely contacted, and the resistance of the film was measured at an alternating current of 10 kHz at a voltage of 1 V under constant temperature and humidity conditions at a temperature of 80°C with a relative humidity of 50% by a known 4-prove method, and the proton conductivity was calculated from the results.

(Softening Temperature, Glass Transition Temperature)

The softening temperature and the glass transition temperature of polymer Q were determined by the following method.
Using a dynamic viscoelasticity analyzer (DVA200, manufactured by ITK Co., Ltd.), the dynamic viscoelasticity of a film of polymer Q was measured under conditions with a sample width of 0.5 cm, a length of specimen between grips being 2 cm at a measuring frequency of 1 Hz at a temperature raising rate of 2 °C/min, and the temperature at which the storage modulus becomes half the value at 50°C was regarded as the softening temperature. Further, the glass transition temperature (Tg) was determined from the peak value of tanδ.

(Tensile Yield Stress, Tensile Strain to Yield Point and Tensile Strength)

The tensile yield stress and the tensile strength of a polymer electrolyte membrane were determined in accordance with the manner as mentioned above.
The tensile strain to the yield point of the polymer electrolyte membrane was determined as mentioned below.
To the closest curve among four examples of tensile stress-strain curve shown in Fig. 1 in JIS K7161-1994, the tensile stress-strain curve obtained was applied, whereby the yield point y in the tensile stress-strain curve was determined. The tensile strain ε at the yield point y was regarded as the tensile strain to the yield point $\varepsilon_y$.

(Initial Cell Voltage)

As a separator, a carbon plate (groove width: 1 mm, land portion: 1 mm) having fine grooves for gas flow paths cut in a zigzag line was prepared.

Such separators were disposed on both outside surfaces of a membrane/electrode assembly, and a heater was further disposed on the outside of the separators to assemble a polymer electrolyte fuel cell with an effective membrane area of 25 $cm^2$.

The air and hydrogen were supplied to the cathode and the anode respectively at 0.15 MPa while the temperature of the polymer electrolyte fuel cell was maintained at 80°C. The respective gases were supplied to the respective electrodes in a state where they are humidified to a relative humidity of 50% by a humidifier. The cell voltages at electric current densities of 0.1 $A/cm^2$ and 1 $A/cm^2$ were respectively measured.

(Durability)

The durability of a membrane/electrode assembly against repeats of a wet state and a dry state was evaluated in accordance with the method disclosed in the following document.

Yeh-Hung Lai, Cortney K. Mittelsteadt, Craig S. Gittleman, David A. Dillard, "VISCOELASTIC STRESS MODEL AND MECHANICAL CHARACTERIZATION OF PERFLUOROSULFONIC ACID (PFSA) POLYMER ELECTROLYTE MEMBRANES", Proceedings of FUELCELL2005, Third International Conference on Fuel Cell Science, Engineering and Technology, FUELCELL2005, (2005), 74120.

Specifically, while the temperature of a polymer electrolyte fuel cell used for measurement of the initial cell voltage was maintained at 80°C, humidified air with a relative humidity of 150% was made to flow through both electrodes at 1 SLPM for two minutes, and the air with a relative humidity of 0% was made to flow at 1 SLPM for two minutes. 100 Cycles each cycle comprising the above operation were repeated. Every 100 cycles, a difference in pressure between both electrodes was caused to judge presence or absence of physical gas leak. A point where the gas leak occurred and the gas crossover rate became 10 sccm or above was judged as the end of a cell's life. The number of cycles at such a point was regarded as the index of the durability.

EXAMPLE 1

Compound (m11) was prepared by the following synthetic route:

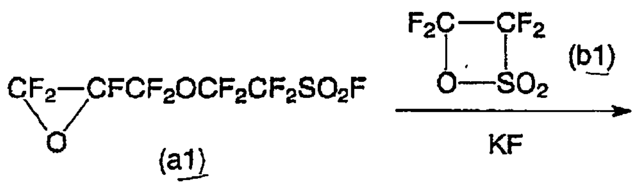


(a1)

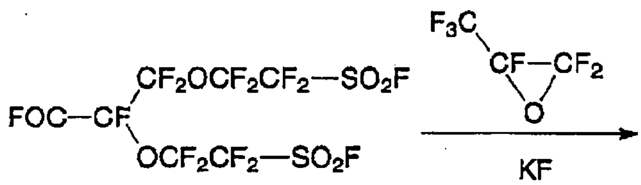


(c1)

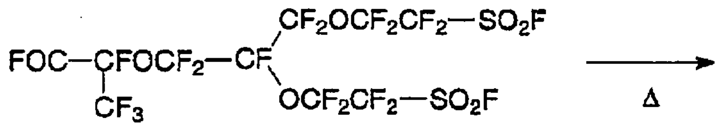


(d1)

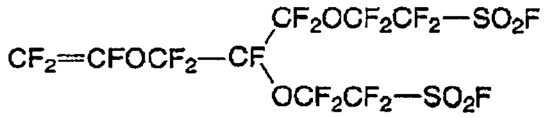

(m11)

(i) Preparation of compound (a1):

Compound (a1) was prepared in the same manner as in the method as disclosed in Example 2 of JP-A-57-176973.

(ii) Preparation of compound (c1):

To a 300 $cm^3$ four-necked round bottom flask equipped with a Dimroth condenser, a thermometer, a dropping funnel and a glass rod with an agitating blade, 1.6 g of potassium fluoride (tradename: Chloro-Catch F, manufactured by MORITA CHEMICAL INDUSTRIES CO., LTD.) and 15.9 g of dimethoxyethane were put in a nitrogen atmosphere. Then, the round bottom flask was cooled in an ice bath, and 49.1 g of compound (b1) was added dropwise from the dropping funnel over a period of 32 minutes at an internal temperature of at most 10°C. After completion of the dropwise addition, 82.0 g of compound (a1) was added dropwise from the dropping funnel over a period of 15 minutes. Substantially no increase in the internal temperature was observed. After completion of the dropwise addition, the internal temperature was recovered to room temperature, followed by stirring for about 90 minutes. The lower layer was recovered by a separatory funnel. The recovered amount was 127.6 g, and the gas chromatography (hereinafter referred to as GC) purity was 55%. The recovered liquid was put in a 200 $cm^3$ four-necked round bottom flask, followed by distillation to obtain 97.7 g of compound (c1) as a fraction at a degree of vacuum of from 1.0 to 1.1 kPa (absolute pressure). The GC purity was 98%, and the yield was 80%.

(iii) Preparation of compound (d1):

To a 200 $cm^3$ autoclave made of stainless steel, 1.1 g of potassium fluoride (tradename: Chloro-Catch F, manufactured by MORITA CHEMICAL INDUSTRIES CO., LTD.) was put. After deaeration, 5.3 g of dimethoxyethane, 5.3 g of acetonitrile and 95.8 g of compound (c1) were put in the autoclave under reduced pressure.

Then, the autoclave was cooled in an ice bath, 27.2 g of hexafluoropropene oxide was added over a period of 27 minutes at an internal temperature of from 0 to 5°C, and the internal temperature was recovered to room temperature with stirring, followed by stirring overnight. The lower layer was recovered by a separatory funnel. The recovered amount was 121.9 g, and the GC purity was 63%. The recovered liquid was subjected to distillation to obtain 72.0 g of compound (d1) as a fraction at a boiling point of 80 to 84°C/0.67 to 0.80 kPa (absolute pressure). The GC purity was 98%, and the yield was 56%.

(iv) Preparation of compound (m11):

Using a stainless steel tube with an inner diameter of 1.6 cm, a U-tube with a length of 40 cm was prepared. One end of the U-tube was filled with glass wool, and the other end was filled with glass beads with a stainless steel sintered metal as a perforated plate to prepare a fluidized bed type reactor. A nitrogen gas was used as a fluidizing gas so that raw materials could be continuously supplied by a metering pump. The outlet gas was collected using a trap tube with liquid nitrogen.

The fluidized bed type reactor was put in a salt bath, and 34.6 g of compound (d1) was supplied to the fluidized

bed type reactor over a period of 1.5 hours so that the molar ratio of compound (d1)/$N_2$ would be 1/20 while the reaction temperature was maintained at 340°C. After completion of the reaction, 27 g of a liquid was obtained by the liquid nitrogen trap. The GC purity was 84%. The liquid was subjected to distillation to obtain compound (m11) as a fraction at a boiling point of 69°C/0.40 kPa (absolute pressure). The GC purity was 98%.
$^{19}$F-NMR (282.7 MHz, solvent: $CDCl_3$, standard: $CFCl_3$) of compound (m11).
δ(ppm): 45.5(1F), 45.2(1F), -79.5(2F), -82.4(4F), -84.1(2F), -112.4(2F), -112.6(2F), -112.9 (dd, J=82.4 Hz, 67.1 Hz, 1F), -121.6 (dd, J=112.9Hz, 82.4Hz, 1F), -136.0 (ddt, J=112.9 Hz,67.1 Hz, 6.1 Hz, 1F), -144.9(1F).

EXAMPLE 2

Preparation of polymer P1:

The interior of an autoclave (internal capacity: 2,575 $cm^3$, made of stainless steel) was replaced with nitrogen, followed by sufficient deaeration. Under reduced pressure, 945.3 g of compound (m11), 425.7 g of compound (2-1) as a solvent, 164.3 g of compound (n11) and 654.2 mg of compound (3-1) (PEROYL IPP, manufactured by NOF CORPORATION) as an initiator were charged, and the autoclave was deaerated to the vapor pressure:

$CClF_2CF_2CHClF$ (2-1)

$CF_2=CFOCF_2CF(CF_3)OCF_2CF_2CF_3$ (n11)

$(CH_3)_2CHOC(=O)OOC(=O)OCH(CH_3)_2$ (3-1)

The internal temperature was raised to 40°C, tetrafluoroethylene (hereinafter referred to as TFE) was introduced to the autoclave, and the pressure was adjusted at 0.42 MPaG (gauge pressure). Polymerization was carried out for 7.0 hours while the temperature and the pressure were maintained constant. Then, the autoclave was cooled to terminate the polymerization, and the gas in the system was purged.

The reaction liquid was diluted with compound (2-1), and compound (2-2) was added to coagulate the polymer, followed by filtration:

$CH_3CCl_2F$ (2-2).

The polymer was stirred in compound (2-1), and compound (2-2) was added to re-coagulate the polymer, followed by filtration. Such recoagulation was repeated twice. The polymer was dried under reduced pressure at 80°C overnight, to obtain polymer P1 which is a copolymer of TFE, compound (m11) and compound (n11). The yield, the ion exchange capacity, the TQ value and the ratio of repeating units constituting the polymer are shown in Table 1.

EXAMPLE 3

Preparation of polymer P2:

The interior of an autoclave (internal capacity: 2,575 $cm^3$, made of stainless steel) was replaced with nitrogen, followed by sufficient deaeration. Under reduced pressure, 1,035.0 g of compound (m11), 414.0 g of compound (2-1) as a solvent, 80.1 g of compound (n11), 122.1 mg of methanol and 616.5 mg of compound (3-1) as an initiator were charged, and the autoclave was deaerated to the vapor pressure.

The internal temperature was raised to 40°C, TFE was introduced to the autoclave, and the pressure was adjusted at 0.46 MPaG (gauge pressure). Polymerization was carried out for 5.75 hours while the temperature and the pressure were maintained constant. Then, the autoclave was cooled to terminate the polymerization, and the gas in the system was purged.

The reaction liquid was diluted with compound (2-1), and compound (2-2) was added to coagulate the polymer, followed by filtration.

The polymer was stirred in compound (2-1), and compound (2-2) was added to re-coagulate the polymer, followed by filtration. Such recoagulation was repeated twice. The polymer was dried under reduced pressure at 80°C overnight to obtain polymer P2 which is a copolymer of TFE, compound (m11) and compound (n11). The yield, the ion exchange capacity, the TQ value and the ratio of repeating units constituting the polymer are shown in Table 1.

EXAMPLE 4

Preparation of polymer P3:

The interior of an autoclave (internal capacity: 2,575 $cm^3$, made of stainless steel) was replaced with nitrogen, followed by sufficient deaeration. Under reduced pressure, 1,127.9 g of compound (m11), 403.5 g of compound (2-1) as a solvent and 535.8 mg of compound (3-1) as an initiator were charged, and the autoclave was deaerated to the vapor pressure.

The internal temperature was raised to 40°C, TFE was introduced to the autoclave, and the pressure was adjusted at 0.41 MPaG (gauge pressure). Polymerization was carried out for 7.2 hours while the temperature and the pressure were maintained constant. Then, the autoclave was cooled to terminate the polymerization, and the gas in the system was purged.

The reaction liquid was diluted with compound (2-1), and compound (2-2) was added to coagulate the polymer, followed by filtration.

The polymer was stirred in compound (2-1), and compound (2-2) was added to re-coagulate the polymer, followed by filtration. Such recoagulation was repeated twice. The polymer was dried under reduced pressure at 80°C overnight to obtain polymer P3 which is a copolymer of TFE and compound (m11). The yield, the ion exchange capacity, the TQ value and the ratio of repeating units constituting the polymer are shown in Table 1.

TABLE 1

| | | Example 2 | Example 3 | Example 4 |
|---|---|---|---|---|
| Precursor polymer | | P1 | P2 | P3 |
| Yield (g) | | 188.1 | 174.4 | 180.0 |
| Ion exchange capacity (meq/g dry polymer) | | 1.45 | 1.58 | 1.81 |
| TQ value °C) | | 263 | 257 | 277 |
| Ratio of repeating units (mol%) | TFE | 83.7 | 84.2 | - |
| | m11 | 13.0 | 14.2 | - |
| | n11 | 3.3 | 1.6 | - |

EXAMPLE 5

Preparation of film of polymer Q1:

Polymer P1 was treated by the following method to obtain a film of acid form polymer Q1.

First, polymer P1 was formed into a film with a thickness of from 100 to 200 μm by press molding at the TQ temperature of polymer P1.

Then, the above film was immersed in an aqueous solution containing 30 mass% of dimethyl sulfoxide and 15 mass% of potassium hydroxide at 80°C for 16 hours to hydrolyze $-SO_2F$ groups in the film thereby to convert these groups to $-SO_3K$ groups.

Then, the above film was immersed in a 3 mol/L hydrochloric acid aqueous solution at 50°C for 2 hours. The hydrochloric acid aqueous solution was exchanged, and the same treatment was further carried out four times. The film was sufficiently washed with deionized water to obtain a film of polymer Q1 having $-SO_3K$ groups in the film converted to sulfonic acid groups.

The softening temperature and the glass transition temperature of the film of polymer Q1 were measured. The results are shown in Table 2.

EXAMPLE 6

Preparation of films of polymers Q2:

A film of an acid form polymer Q2 was obtained in the same manner as in Example 5 except that a polymer P2 was used instead of polymer P1.

The softening temperatures and the glass transition temperatures of the film of polymer Q2 was measured. The results are shown in Table 2.

EXAMPLE 7

Preparation of films of polymers Q3:

A film of an acid form polymer Q3 was obtained in the same manner as in Example 5 except that a polymer P3 was used instead of polymer P1.

The softening temperatures and the glass transition temperatures of the film of polymer Q3 was measured. The results are shown in Table 2.

TABLE 2

| | Example 5 | Example 6 | Example 7 |
|---|---|---|---|
| Fluoropolymer | Q1 | Q2 | Q3 |
| Softening temperature (°C) | 70 | 94 | 104 |
| Glass transition temperature (°C) | 126 | 130 | 138 |

EXAMPLE 8

Preparation of polymer electrolyte membrane:

To polymer Q1, a mixed solvent of ethanol, water and 1-butanol (ethanol/water/1-butanol = 35/50/15 by mass ratio) was added to adjust the solid content concentration to 15 mass%, followed by stirring by using an autoclave at 125°C for 8 hours. Water was further added to adjust the solid content concentration to 9 mass% to obtain a solution S1 having polymer Q1 dispersed in a solvent. The composition of the solvent was ethanol/water/1-butanol = 21/70/9 (mass ratio).

$Ce_2(CO_3)_3 \cdot 8H_2O$in the number of mols corresponding to 5% of ionic groups in a solution S1 was added, followed by stirring at room temperature for 4 hours, and the resulting solution was applied to a sheet made of a copolymer of ethylene and TFE (AFLEX 100N, tradename, manufactured by Asahi Glass Company, Limited, thickness: 100 μm) (hereinafter referred to as an ETFE sheet) by a die coater and dried at 80°C for 30 minutes, and further annealed at 150°C for 30 minutes to form polymer electrolyte membrane R1 with a thickness of 25 μm.

The tensile yield stress, the tensile strain to an yield point, the tensile strength and the proton conductivity of polymer electrolyte membrane R1 were measured. the results are shown in Table 3. Further, regarding the polymer electrolyte membrane R1, the tensile stress-strain curves obtained are shown in Fig 5 and Fig 6.

EXAMPLE 9

Preparation of polymer electrolyte membrane:

The polymer electrolyte membrane R2 was obtained in the same manner as in Example 8 except that polymer Q2 was used instead of polymer Q1.

The tensile yield stress, the tensile strain to an yield point, the tensile strength and the proton conductivity of polymer electrolyte membrane R2 were measured. The results are shown in Table 3. Further, regarding the polymer electrolyte membrane R2, the tensile stress-strain curves obtained are shown in Fig 5 and Fig 6.

EXAMPLE 10

Preparation of polymer electrolyte membrane:

The polymer electrolyte membrane R3 was obtained in the same manner as in Example 8 except that polymer Q3 was used instead of polymer Q1.

The tensile yield stress, the tensile strain to an yield point, the tensile strength and the proton conductivity of polymer electrolyte membrane R3 were measured. The results are shown in Table 3. Further, regarding the polymer electrolyte membrane R3, the tensile stress-strain curves obtained are shown in Fig 5 and Fig 6.

Polymers Q1 to Q3 constituting polymer electrolyte membranes R1 to R3, have repeating units having vinyl ether type structure with a sulfonic group, which are introduced from repeating units based on monomer (m11). EW of the vinyl ether type monomer is 313.

EXAMPLE 11

The tensile yield stress, the tensile strain to an yield point, the tensile strength and the proton conductivity of a commercially available fluoropolymer electrolyte membrane (Nafion NRE211, manufactured by Dupont) were measured. The results are shown in Table 3. Further, regarding the commercially available fluoropolymer electrolyte membrane, the tensile stress-strain curves obtained are shown in Fig 5 and Fig 6.

A fluoropolymer constituting Nafion NRE211 has repeating units based on compound (1-1). EW of the compound (1-1) is 446.

$$CF_2=CFOCF_2CF\ (CF_3)\ OCF_2CF_2SO_3H \qquad (1\text{-}1)$$

TABLE 3

| | Example 8 | Example 9 | Example 10 | Example 11 |
|---|---|---|---|---|
| Polymer electrolyte membrane | R1 | R2 | R3 | Commercial product |
| EW | 313 | 313 | 313 | 446 |
| Tensile yield stress (MPa) | 3.0 | 3.6 | 5.5 | 6.2 |
| Tensile strain to an yield point (%) | 17 | 12 | 15.5 | 15 |
| Tensile strength [MPa] | 23.3 | 20.0 | 22.0 | 17.3 |
| Tensile strength/ Tensile yield stress | 7.8 | 5.6 | 4.0 | 2.8 |
| Proton conductivity (S/cm) | 0.08 | 0.095 | 0.095 | 0.05 |

Example 12

Preparation of membrane/electrode assembly:

Polymer Q1 was added to a solvent mixture of ethanol and water (ethanol/water=1/1 mass ratio) and dissolved therein in a flask with a reflux function with stirring at 60°C for 16 hours, to obtain a solution having a solid content concentration of 9 mass%.

Separately from the above, water and ethanol were added in this order to platinum supported on carbon to obtain a catalyst ink (solid content concentration: 9 mass%) having platinum supported on carbon dispersed in a mixed solvent of ethanol and water (ethanol/water=1/1 mass ratio).

A solution and the catalyst ink were mixed in a ratio of a solution/catalyst ink=1/2 (mass ratio) to prepare a liquid for forming a catalyst layer.

The ETFE sheet was separated from polymer electrolyte membrane R1, and the liquid for forming a catalyst layer was applied to both surfaces of polymer electrolyte membrane by dye coating and dried to form a catalyst layer having a thickness of 10 um and an amount of platinum supported of 0.2 $mg/cm^2$. Carbon cloth as a gas diffusion layer was disposed on both outside surfaces of the catalyst layers to obtain a membrane/electrode assembly.

Using the membrane/electrode assembly, a polymer electrolyte fuel cell was prepared, and the initial cell voltage was measured and the durability was evaluated. The results are shown in Table 4.

EXAMPLE 13

A membrane/electrode assembly was obtained in the same manner as in Example 12 except that polymer Q1 used to form a catalyst layer was changed to polymer Q2 and polymer electrolyte membrane R1 was changed to polymer electrolyte membrane R2.

Using the membrane/electrode assembly, a polymer electrolyte fuel cell was prepared, and the initial cell voltage was measured and the durability was evaluated. The results are shown in Table 4.

EXAMPLE 14

A membrane/electrode assembly was obtained in the same manner as in Example 12 except that polymer Q1 used to form a catalyst layer was changed to polymer Q3 and polymer electrolyte membrane R1 was changed to polymer electrolyte membrane R3.

Using the membrane/electrode assembly, a polymer electrolyte fuel cell was prepared, and the initial cell voltage was measured and the durability was evaluated. The results are shown in Table 4.

EXAMPLE 15

A membrane/electrode assembly was obtained in the same manner as in Example 12 except that polymer electrolyte membrane R1 was changed to a commercially available fluoropolymer electrolyte membrane (Nafion NRE211, manufactured by Dupont).

Using the membrane/electrode assembly, a polymer electrolyte fuel cell was prepared, and the initial cell voltage was measured and the durability was evaluated. The results are shown in Table 4.

TABLE 4

| Membrane/electrode assembly | | Example 12 | Example 13 | Example 14 | Example 15 |
|---|---|---|---|---|---|
| Initial cell voltage (mV) | Electric current density 0.1 A/cm$^2$ | 810 | 810 | 810 | 810 |
| | Electric current density 1 A/cm$^2$ | 680 | 700 | 700 | 600 |
| Durability (number of cycles) | | 22000 | 20000 | 5000 | 3000 |

INDUSTRIAL APPLICABILITY

By using the polymer electrolyte membrane and the membrane/electrode assembly of the present invention, a long life polymer electrolyte fuel cell can be obtained.

The entire disclosure of Japanese Patent Application No. 2006-319927 filed on November 28, 2006 including specification, claims, drawings and summary is incorporated herein by reference in its entirety.

## Claims

1. A polymer electrolyte membrane for polymer electrolyte fuel cells, comprising a fluoropolymer and having a tensile yield stress of at most 5.5 MPa, as determined by the following procedures (i) and (ii):

   (i) the polymer electrolyte membrane is subjected to a tensile test according to JIS K 7161-1994 at a temperature of 80°C and a strain rate of 1/min to obtain a tensile stress-strain curve, and
   (ii) from the tensile stress-strain curve, the tensile yield stress of the polymer electrolyte membrane is obtained by an evaluation method according to JIS K 7161-1994.

2. The polymer electrolyte membrane for polymer electrolyte fuel cells according to Claim 1, which has a tensile strength of at least 20 MPa, as determined by the following procedure (iii):

   (iii) from the tensile stress-strain curve obtained in the above procedure (i), the tensile strength of the polymer electrolyte membrane is obtained by an evaluation method according to JIS K 7161-1994.

3. The polymer electrolyte membrane for polymer electrolyte fuel cells according to Claim 2, wherein the ratio of the above tensile strength to the above tensile yield stress (tensile strength/tensile yield stress) is at least 4.0.

4. The polymer electrolyte membrane for polymer electrolyte fuel cells according to any one of Claims 1 to 3, wherein the above tensile yield stress is at most 4.0 MPa.

5. The polymer electrolyte membrane for polymer electrolyte fuel cells according to any one of Claims 1 to 4, which has a proton conductivity of at least 0.06S/cm in an atmosphere at a temperature of 80°C under a relative humidity of 50%.

6. The polymer electrolyte membrane for polymer electrolyte fuel cells according to any one of Claims 1 to 5, wherein the above fluoropolymer has repeating units based on a vinyl ether type monomer with a mass (equivalent weight)

of at most 400 per 1 mol of ionic groups.

7. A membrane/electrode assembly for polymer electrolyte fuel cells, in which the polymer electrolyte membrane for polymer electrolyte fuel cells as defined in any one of Claims 1 to 6, is disposed between an anode and a cathode.

Fig. 1

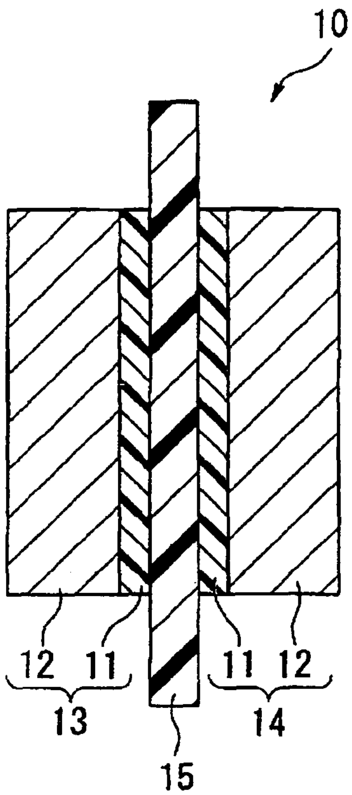
10
12
11
11
12
13
14
15

Fig. 2

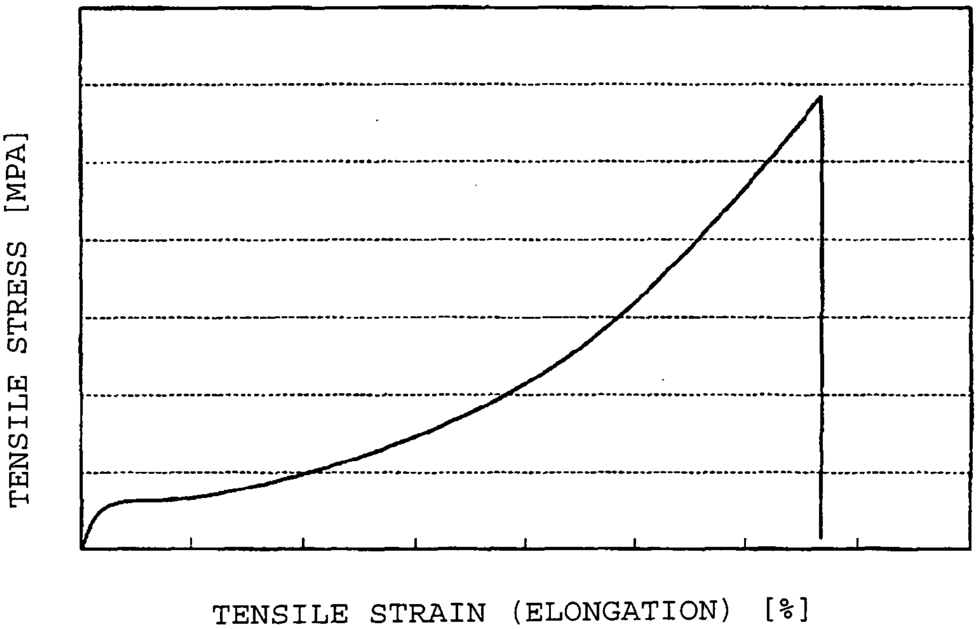
TENSILE STRESS [MPA]
TENSILE STRAIN (ELONGATION) [%]

Fig. 3

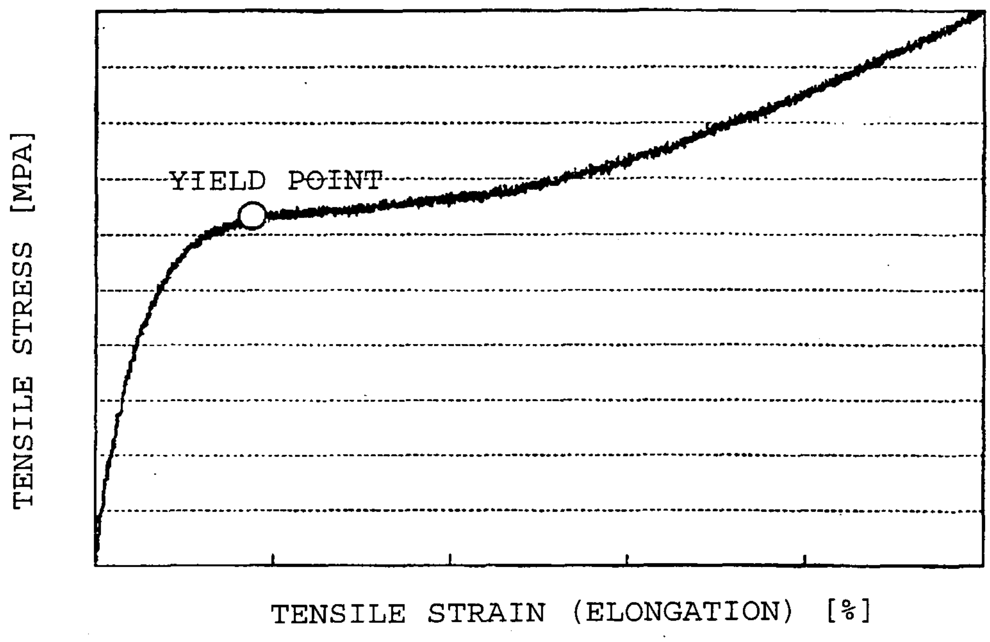
TENSILE STRESS [MPA]
YIELD POINT
TENSILE STRAIN (ELONGATION) [%]

Fig. 4

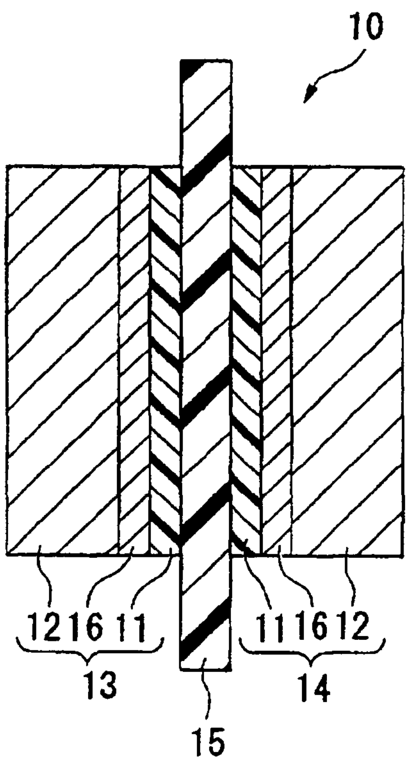
10
12
16
11
11
16
12
13
14
15

Fig. 5

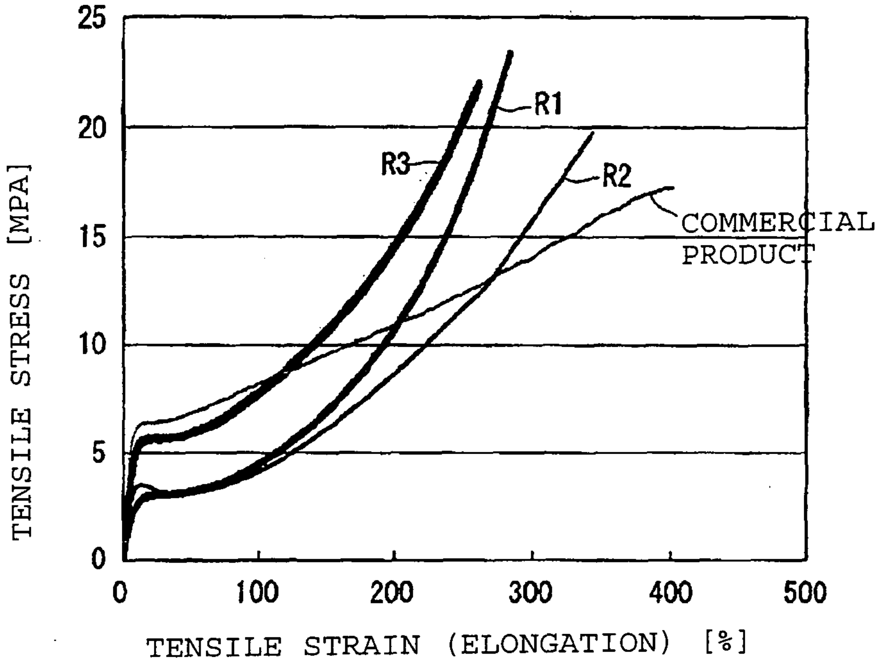
TENSILE STRESS [MPA]
TENSILE STRAIN (ELONGATION) [%]
R1
R2
R3
COMMERCIAL PRODUCT
0
5
10
15
20
25
0
100
200
300
400
500

Fig. 6

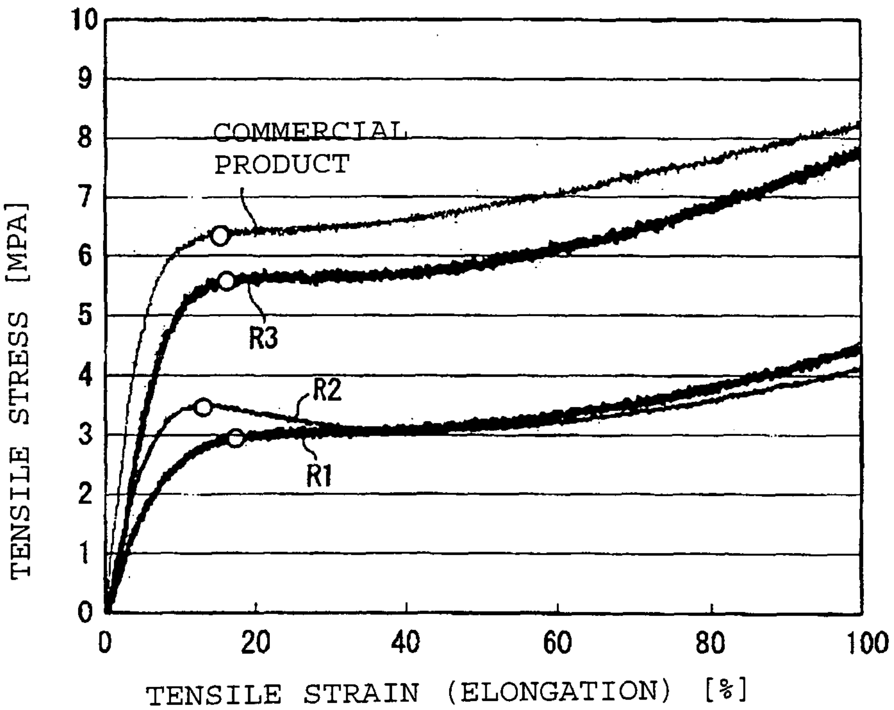
TENSILE STRESS [MPA]
TENSILE STRAIN (ELONGATION) [%]
COMMERCIAL PRODUCT
R3
R2
R1
0
1
2
3
4
5
6
7
8
9
10
0
20
40
60
80
100

## INTERNATIONAL SEARCH REPORT

International application No.
PCT/JP2007/072867

A. CLASSIFICATION OF SUBJECT MATTER
*H01M8/02*(2006.01)i, *C08F16/24*(2006.01)i, *C08J5/22*(2006.01)i, *H01B1/06*(2006.01)i, *H01M8/10*(2006.01)i

According to International Patent Classification (IPC) or to both national classification and IPC

B. FIELDS SEARCHED

Minimum documentation searched (classification system followed by classification symbols)
H01M8/02, C08F16/24, C08J5/22, H01B1/06, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)
JSTPlus(JDream2)

C. DOCUMENTS CONSIDERED TO BE RELEVANT

| Category* | Citation of document, with indication, where appropriate, of the relevant passages | Relevant to claim No. |
|---|---|---|
| A | Sumit Kundu, Leonardo C. Simon, Michael Fowler, Stephen Grot, Mechanical properties of NafionTM electrolyte membranes under hydrated conditions, Polymer, 2005, 46, p.11707-11715 | 1-7 |
| A | JP 6-322034 A (E.I. Du Pont De Nemours & Co.), 22 November, 1994 (22.11.94), Full text & US 5281680 A & EP 0606842 A1 | 1-7 |
| A | JP 2003-212988 A (JSR Corp.), 30 July, 2003 (30.07.03), Table 1 (Family: none) | 1-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 February, 2008 (04.02.08) | 19 February, 2008 (19.02.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2007/072867

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-352819 A (Asahi Kasei Corp.), 06 December, 2002 (06.12.02), Claim 1 (Family: none) | 1-7 |
| A | JP 2006-114277 A (Toyota Motor Corp.), 27 April, 2006 (27.04.06), Claim 1 & WO 2006/040905 A1 & EP 1807469 A | 1-7 |
| A | JP 2005-235736 A (Aisin Seiki Co., Ltd.), 02 September, 2005 (02.09.05), Par. No. [0011] & US 2005/0181263 A1 | 1-7 |
| A | JP 2006-40677 A (Daihatsu Motor Co., Ltd.), 09 February, 2006 (09.02.06), Par. No. [0009] (Family: none) | 1-7 |
| P,A | JP 2007-214108 A (Samsung SDI Co., Ltd.), 23 August, 2007 (23.08.07), Par. Nos. [0186], [0187] (Family: none) | 1-7 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005302592 A
- US 5463005 A
- JP 57176973 A
- JP 2006319927 A

### Non-patent literature cited in the description

- *Inorg. Chem.,* 1993, vol. 32 (23), 5, 007